# EUROPEAN PATENT APPLICATION

(11) **EP 2 762 302 A1**
(43) Date of publication of application: **06.08.2014**
(21) Application number: 13153171.7
(22) Date of filing: 30.01.2013
(51) Int. Cl.: B32B 7/02, B32B 27/08, B32B 27/32

(54) **Novel multilayer film with multimodal polyolefin**

(71) Applicant: Unilever N.V., 3013 AL Rotterdam (NL)
(72) Inventor: The designation of the inventor has not yet been filed
(74) Representative: Hardy, Susan Margaret

(57) **Abstract**

The present invention relates to a film for packaging a product, particularly to an improved multilayered film having multimodal polyolefin. It is thus an object of the present invention to provide a multilayered film that has reduced failures due to thinning of the film during sealing operation. It is another object of the present invention to provide a multilayered film having broad sealing temperature. It is yet another object of the present invention to provide a multilayered film suitable for running on form fill seal machines with reduced failures. It is still another object of the present invention to provide a multilayered film with good dart impact resistance and seal strength. The present inventors have surprisingly found that a multilayered film having a first layer of metallocene polyolefin or a mixture of metallocene polyolefin and low density polyolefin and a second and third layer having a multimodal polyolefin or a mixture of metallocene polyolefin and multimodal polyolefin provides for significant reduction in thinning at the sealing area while still maintaining high dart impact resistance. The present inventors have further found that such films when used on high speed automatic form fill seal machines provides significant reduction in the number of failures at the seal area.

## Description

### Field of the invention

The present invention relates to a film for packaging a product, particularly to an improved multilayered film having multimodal polyolefin.

The invention has been developed primarily for use in packaging detergent powders and will be described hereinafter with reference to this application. However, it will be appreciated that the invention is not limited to this particular field of use.

### Background of the invention

Any discussion of the prior art throughout the specification should in no way be considered as an admission that such prior art is widely known or forms part of the common general knowledge in the field.

Several types of films are used today. Films may be either monolayer-films or they may be co-extruded multilayered films. Among the known films, polyolefin films are extensively used for packaging.

Films used for manufacturing packages or pouches must be sealable in order to allow formation of a package from a sheet of film. Sealing of films is carried out on a manual sealing machine or a high speed form fill seal machine. Sealing involves application of temperature and pressure to the film. The temperature applied by the sealing machines generally fluctuates during operation. Manually operated sealing machines have a pair of heated sealing bars for applying temperature and pressure on the film. In such machines, variations in temperature along the length of a sealing bar may result in different amount of heat being supplied to different areas of the film. In high speed form fill seal machines, a further reason for the fluctuating sealing temperature is due to the variation in the speed at which the film moves over the automatic sealing machine during forming and simultaneous filling of a package. It is desirable to provide films with a broad range of sealing temperature to overcome the problem of varying temperature and ensuring that temperature control during heat sealing becomes less important, especially in high speed form fill seal machines.

It is known to add low melting polymers like low density polyethylene (LDPE) in a polymer blend to provide polyolefin films with broad range of sealing temperature. Such polyolefin films enable sealing to be done at lower temperature so that there is no need for precise control on temperature. A disadvantage with i low melting polymers into the film composition is that melting of the low melting polymer in the sealing area may lead to development of undesirable wrinkles and worse still cause the polymer to flow out of the sealing area resulting in thinning of the films around the sealing area. Such thinning weakens the film around the sealing area and results in failures during further transit and storage. Other factors that may further add to the problem of wrinkle formation and thinning of the film near the sealing area includes pressure applied by the hot seal bars of the sealing machine and the load of material filling into the formed package. These problems are further compounded in form fill seal machine that run on high speed, have short sealing time and apply greater pressure on the film. Such packages fail during the drop test at the sealing area, both at the vertical seal and horizontal seal and at the T-junction located on the ears of gussets, if there are any. Failing of the pouches around the seal area as a result of seal thinning results in high number of rejects in the packaging process and is of major concern in the industry where the number of the automatic high speed machines is on the rise.

It is known in the art to prepare films having combination of a multimodal polyolefin and a metallocene polyolefin.

One such film was described in US2008/0057238A1 (Follestad et al.) that discloses a multilayered film having at least three layers; each outer layer independently having a LLDPE component and the core layer having a multimodal polyethylene component. This application addresses the problem of failure of package due to reduced dart impact resistance. It is silent about failures due to thinning of the package in the sealing area. There is an unmet need for films and package prepared therefrom that provides for reduced thinning of the film at the sealing area especially when used on high speed form fill seal machines under high temperature and pressure conditions while still providing the desired high dart impact resistance, tear strength, puncture resistance, toughness, stiffness to the film and have good processability.

It is thus an object of the present invention to provide a multilayered film that has reduced failures due to thinning of the film during sealing operation.

It is another object of the present invention to provide a multilayered film having broad sealing temperature.

It is yet another object of the present invention to provide a multilayered film suitable for running on form fill seal machines with reduced failures due to thinning of the film around the sealing area.

It is still another object of the present invention to provide a multilayered film with good dart impact resistance and seal strength.

The present inventors have surprisingly found that a multilayered film having a first layer of metallocene polyolefin or a combination of metallocene polyolefin and low density polyolefin and a second and third layer having a multimodal polyolefin or a combination of metallocene polyolefin and multimodal polyolefin provides for significant reduction in thinning of film at the sealing area while still maintaining high dart impact resistance. The present inventors have further found that such films when used on high speed automatic form fill seal machines provides significant reduction in the number of failures at the seal area.

### Summary of the invention

According to a first aspect disclosed is a multilayered film comprising, in sequence:
(i) a first layer comprising 80 to 100 wt% metallocene polyolefin;
(ii) a second layer comprising 60 to 100 wt% multimodal polyolefin; and,
(iii) a third layer comprising 60 to 100 wt% multimodal polyolefin;
characterised in that ratio of melt flow index (at 190°C and 2.16 kg) of the metallocene polyolefin of the first layer to the melt flow index of the multimodal polyolefin of the second or the third layer is at least 2:1.

According to a second aspect disclosed is a process for making a multilayered film according to the first aspect comprising the steps of:
(i) feeding a first polymer comprising 80 to 100 wt% metallocene polyolefin to a first extruder;
(ii) feeding a second polymer comprising 60 to 100 wt% multimodal polyolefin to a second extruder;
(iii) feeding a third polymer comprising 60 to 100 wt% multimodal polyolefin to a third extruder;
(iv) co-extruding the first, the second and the third polymer through said first, second and third extruders respectively to form a co-extrudate wherein the co-extrudate comprises a first layer comprising 80 to 100 wt% metallocene polyolefin; a second layer comprising 60 to 100 wt% multimodal polyolefin ; a third layer comprising 60 to 100 wt% multimodal polyolefin; and, characterised in that ratio of melt flow index (at 190°C and 2.16 kg) of the metallocene polyolefin of the first layer to the melt flow index of the multimodal polyolefin of the second or the third layer is atleast 2:1 and,
(v) blowing the co-extrudate to form the multilayered film.

According to the third aspect disclosed is a use of the film of the first aspect for making a package having atleast 145 gf dart impact resistance.

### Detailed description of the invention

Disclosed multilayered film includes a first layer having a metallocene polyolefin and a second layer having a multimodal polyolefin and a third layer having a multimodal polyolefin.

### Multilayered film:

Disclosed multilayered film of the invention has three layers and preferably the multilayered film has five or seven layers.

Disclosed multilayered film preferably has a thickness of 20 to 200 microns more preferably from 30 to 150 microns and still more preferably from 50 to 120 microns. It is preferred that the ratio of the thickness of the first layer to the combined thickness of the second layer and third layer is at least 1:2, more preferably the ratio of the thickness is atleast 1:3.

Preferably the disclosed multilayered film is further laminated to a Polyethyleneterepthalate (PET) or biaxially oriented polypropylene (BOPP) or polyethylene (PE) layer or biaxially oriented nylon.

### First layer:

Disclosed multilayered film includes a first layer having 80 to 100 wt% of metallocene polyolefin.

Preferably the first layer includes more than 82 wt% still preferably 85 wt% and further preferably 87 wt% by weight of the first layer of the metallocene polyolefin but not more than 94 wt% and still preferably not more than 90 wt% by weight of the first layer of the metallocene polyolefin.

Preferably the metallocene polyolefin of the first layer is a metallocene LLDPE, a metallocene MDPE or mixtures thereof and more preferably the metallocene polyolefin is a metallocene LLDPE (mLLDPE). The mLLDPE is preferably unimodal mLLDPE (i.e; one produced using single site catalysts, e. g. metallocene catalysis). By unimodal is meant that the molecular weight profile of the polymer comprises a single peak and is produced by one reactor and a single catalyst. Preferably the mLLDPE has a density of less than 940 kg/m³ more preferably the density is in the range of 915 to 934 kg/m³ more preferably between 918 to 934 kg/m³ and still more preferably between 920 to 930 kg/m³ (ISO 1183).

Preferably the mLLDPE is formed from ethylene along with at least one C₃₋₁₂ alpha-olefin comonomer,e. g. butene, hexene or octene. Preferably, the mLLDPE is an ethylene hexene copolymer, ethylene octene copolymer or ethylene butene copolymer.

Preferably the mLLDPE has a melt flow rate (190°C, 2.16 kg) in the range 0.5 to 10 g/10 minutes, more preferably 0.5 to 6.0 g/10 minutes and still more preferably 0.5 to 2.0 g/10 minutes.

Disclosed first layer preferably includes low density polyolefin. When present the low density polyolefin is not more than 20 wt% still more preferably not more than 15 wt% and further more preferably not more than 8 wt% by weight of the first layer of the multilayered film. Preferably the low density polyolefin is low density polyethylene (LDPE). LDPE is known to provide improved processability in the bubble formation during the blown film process however the LDPE significantly reduces the dart impact resistance of the film. It is highly preferred that the low density polyethylene is not more than 5wt% by weight of the first layer. The LDPE may have a density of 915to 935 kg/m³, especially 920 to 930 kg/m³ and still more preferably of 922 to 930 kg/m³. Preferably the LDPE has a melt flow index (190 °C and 2.16 kg pressure) in the range from 0.5 to 4 g/10 minutes, more preferably 0.5 to 2 g/10 minutes and still more preferably 0.5 to 0.75 g/10 minutes. Suitable LDPE are available commercially from The Dow Chemical Company and Reliance Industries Limited. The first layer may further include other polymers like medium density polyethylene (MDPE), high density polyethylene (HDPE) or mixtures thereof. Such additional polymers are well known in the art.

Without wishing to be bound by a theory it is believed that the difference in the melt flow index between the metallocene polyolefin of the first layer and the metallocene polyolefin of the second layer and the difference in the melt flow index between the melt flow index of the metallocene polyolefin of the third layer provides the package formed from the disclosed film with the desired seal strength and reduced thinning around the seal area during the sealing process even at varying sealing temperature seen in a automatic form fill seal machine.

### Second layer:

Disclosed multilayered film includes a second layer having 60 to 100 wt% multimodal polyolefin. Preferably the multimodal polyolefin is atleast 65 wt% more preferably atleast 70 wt%, still more preferably atleast 75 wt% by weight of the second layer but not more than 90 wt% and still preferably not more than 85 wt% by weight of the second layer of the multimodal polyolefin. Preferably a multimodal polyolefin includes atleast a component with lower weight average molecular weight and another component with a higher weight average molecular weight. A multimodal polyolefin includes at least two polyethylene fractions produced under different polymerisation conditions resulting in different (weight average) molecular weights and molecular weight distributions for the fractions, and is therefore referred to as multimodal. The prefix "multi" refers to the number of different polymer fractions present in the polymer. Preferably there may be a difference in molecular weight of at least 1000 Dalton, preferably atleast 5000 Dalton between components. The multimodal polyolefin is preferably produced by a two or more stage copolymerization using a series of reactors including at least one slurry loop reactor and at least one gas phase reactor using a heterogeneous Ziegler-Natta catalyst. Preferably the ethylene copolymer mixture includes ethylene and 2 to 10 percent mole (relative to ethylene), especially 4 to 8 percent mole of a C₃₋₁₂ alpha-olefin co- monomer.

The multimodal polyolefin of the invention may be a mechanical blend, in situ-blend or a combination of mechanical and in-situ blend, preferably in-situ blend, of the polyethylene components comprising at least the low molecular weight component and the high molecular weight component. The term "in situ blend" is well known in the art and means that the blend is formed by producing the first component and then by producing the second or further component(s) in the presence of the previously formed component(s).

Preferably the multimodal polyolefin is an ethylene copolymer mixture having a molecular weight distribution in the range 10 to 35, preferably 15 to 25, a density of 915 to 940 kg/m³, a weight average molecular weight of at least 100000 D, more preferably 150 to 300 kD, and especially 180 to 250 kD. Preferably the multimodal polyolefin of the second layer has a melt flow index (at 190° C and 2.16 kg pressure.) of 0.1 to 0.3 g/10 minutes.

The multimodal polyolefin is preferably a multimodal linear low density polyethylene (multimodal LLDPE). It is highly preferred that the multimodal polyolefin of the second layer is a bimodal polyolefin and includes two copolymer fractions which are both ethylene/butene copolymers. The comonomer incorporation is 2 to 10 percent mole relative to ethylene, especially 4 to 8 percent mole. More preferably the bimodal polyolefin and preferably selected from bimodal LLDPE, bimodal MDPE or mixtures thereof and most preferably a bimodal LLDPE. Preferably the bimodal LLDPE is a copolymer of ethylene with one or more co-monomers.

Various commercially available multimodal polyolefin may be used and potential polymers include Borstar™ FB2230, Borstar™ FB1350, Borstar ™FB2310 from Borouge & Borealis.

Disclosed second layer preferably includes upto 25 wt% metallocene polyolefin. Preferably the metallocene polyolefin is atleast 5 wt% more preferably atleast 10 wt%, still more preferably atleast 15 wt% by weight of the second layer but not more than 23% and still preferably not more than 20 wt% by weight of the second layer is metallocene polyolefin. Preferably the metallocene polyolefin is a metallocene LLDPE, a metallocene MDPE or mixtures thereof and most preferably it is a metallocene LLDPE (mLLDPE).

### Third layer:

Disclosed multilayered film includes a third layer having 60 to 100 wt% multimodal polyolefin.

Preferably the multimodal polyolefin is atleast 65 wt% more preferably atleast 70 wt%, still more preferably atleast 75 wt% by weight of the third layer but not more than 90 wt% and still preferably not more than 85 wt% by weight of the third layer of the multimodal polyolefin. Preferably the multimodal polyolefin of the third layer is identical to the multimodal polyolefin of the second layer of the disclosed film.

Preferably the third layer includes upto 25 wt% metallocene polyolefin. Preferably the metallocene polyolefin is atleast 5 wt% more preferably atleast 10 wt%, still more preferably atleast 15 wt% by weight of the third layer but not more than 23% and still preferably not more than 20 wt% by weight of the third layer is metallocene polyolefin. Preferably the metallocene polyolefin of the third layer is identical to the metallocene polyolefin of the second layer of the disclosed film.

### Optional ingredients:

Disclosed multilayered film may include minor amounts of conventional additives such as antioxidants, UV stabilisers, acid scavengers, nucleating agents, anti-blocking agents, slip agents etc as well as polymer processing agent (PPA).

Further details of the invention will now be explained with reference to nonlimiting examples.

### Examples

### Evaluation of preferred film and comparative film for failures on form fill seal machine

A preferred three layer film (Ex 1) according to the present invention was prepared by a blown film process. Bimodal LLDPE (Borstar® FB2230 from Borouge Pte Limited) was used in the preferred film as the multimodal polyolefin. The composition of the first layer of the film had 80wt% metallocene LLDPE and 20 wt% LDPE. The composition of the second layer of the film had 75wt% bimodal LLDPE and 25 wt% metallocene LLDPE. The composition of the third layer of the film was identical to the composition of the second layer. The composition of the preferred film is provided in Table 1.

The ratio of melt flow index (at 190°C and 2.16 kg) of the metallocene LLDPE (metallocene polyolefin) of the first layer to the melt flow index of the bimodal LLDPE (multimodal polyolefin) of the second layer of the preferred film was 4:1.

The distribution of the first layer, second layer and third layer of the preferred film were 34wt%, 33wt% and 33wt% by weight of the film respectively.

The comparative film (Film a) was prepared by blown film process and had three layers. The composition of the first layer of the comparative film had 80 wt% of metallocene LLDPE and 20 wt% of LDPE. The compositions of the second and third layer of the comparative film were identical to the composition of the first layer. The composition of the comparative film is provided in Table 1. The distribution of the first layer, second layer and third layer of the comparative film were 34wt%, 33wt% and 33wt% by weight of the film respectively.

The preferred film and the comparative film each of 40 micron thickness were laminated to a 8 micron thick PET film and used on a Form fill seal machine for packaging 0.9 kg of a detergent powder. The form fill seal machine had a sealing temperature set at 135°C for vertical jaw and 125°C for horizontal jaw and sealing pressure set at 6 bar.

2500 units of package each prepared with the preferred film and the comparative film were used for conducting a transit trial. The % failures along the seal area are provided in Table 1.

**Table 1**

| | Film-a | | | Ex-1 | | |
|---|---|---|---|---|---|---|
| | 1^{st} layer (wt%) | 2^{nd} layer (wt%) | 3^{rd} layer (wt%) | 1^{st} layer (wt%) | 2^{nd} layer (wt%) | 3^{rd} layer (wt%) |
| Layer distribution (%) | 34 | 33 | 33 | 34 | 33 | 33 |
| Bimodal LLDPE | 0 | 0 | 0 | 0 | 75 | 75 |
| Metallocene LLDPE | 80 | 80 | 80 | 80 | 25 | 25 |
| LDPE | 20 | 20 | 20 | 20 | 0 | 0 |
| % Failures | 30 | | | 0 | | |

The result on Table 1 clearly indicates that the % failures along the sealing area in the package made on the form fill seal machine from the preferred film (Ex-1) is nil and significantly lower than the % failures of the package made from the comparative film (Film-a).

### Evaluation of dart impact resistance of a preferred film and a comparative film

### Method of measurement of dart impact resistance:

The dart impact resistance was measured by ASTM D 1709 test Method. The dart impact resistance of a film was measured using an apparatus that establishes the energy required to tear the film under specified conditions of impact of a free falling dart. The energy is expressed in terms of the weight of the dart when 50% of the film fails. A range of weights is provided to enable tests to be performed on various film thicknesses. The working range of the weights is established by finding the weight that will just break the film.

A sample of 230 mm x 230 mm size was cut out from the preferred film (Ex-1 of Table 1). The sample was free of holes, wrinkles and fold. The sample was held in position on the apparatus by pneumatically operated clamp. A free-falling dart made of steel ball of known weight was dropped on the sample to subject it to an impact. After the impact the sample was checked for determining breaks. The weight of the dart required to fail 50% of the sample was determined and the energy is expressed in terms of the weight of the dart. The dart impact resistance of the preferred film (Ex-1) is provided in Table 2.

Similarly the weight of the dart required to fail 50% of a sample of the comparative film (Film-a of Table 1) was also determined and the energy expressed in terms of the weight of the dart. The dart impact resistance of the comparative film (Film-a) is provided in Table 2.

**Table 2**

| Thickness of the film(microns) | Film-a (g) | Ex-1 (g) |
|---|---|---|
| 25 | 136 | 145 |
| 30 | 215 | 320 |
| 40 | 320 | 400 |
| 50 | 430 | 550 |
| 80 | 550 | 840 |
| 85 | 645 | 990 |
| 100 | 1070 | 1235 |

This clearly shows that the preferred film (Ex-1) provides improved dart impact resistance as compared to the comparative film (Film-a) at varying thickness of the films.

### Evaluation of seal strength of a preferred film and comparative film

### Method of measurement of seal strength:

A sample of dimensions 150 mm x 15 mm was cut from an area free of creases, wrinkles or cuts and notches. The sample was conditioned at 23°C and 50% relative humidity for 24 hours. The conditioned sample was sealed with a laboratory sealer such that the seal is situated in the centre of the sample and is parallel to the shorter edge to form a fin seal.

After sealing, several 15 mm wide test strips were cut from the seal area and the test strips were conditioned at 23°C and 50% relative humidity for 24 hours. The test strip was secured in a vertical configuration, with minimum slack at the centre of a set of jaws that are placed 100mm apart. Known weight of load was applied until the seal region failed. The peak (maximum) force in other terms the break point was recorded and the force at which the seal failed were also recorded. If no initial maximum force is recorded then the average value of the force is determined.

The preferred film (Ex-1) and the comparative film (Film-a) of varying thickness were laminated to PET film of known thickness as shown in Table 3. The seal strength of these films was measured using the method described above. The seal strengths are provided in Table 3.

**Table 3**

| Laminate configuration (thickness in microns) | Ex-a (N/15mm) | Ex-1 (N/15mm) |
|---|---|---|
| 10 PET/25 multilayer film | 25.51 | 29.07 |
| 12 PET/30 multilayer film | 24.52 (tear in PET laminate) | 29.23 |
| 10 PET/40 multilayer film | 25.59 (tear in PET laminate) | 29.85 |
| 8 PET/50 multilayer film | 29.82 | 31.29 |
| 12 PET/80 multilayer film | 36.66 | 42.21 |
| 10 PET/85 multilayer film | 26.91 (tear in PET laminate) | 34.24 |
| 10 PET/100 multilayer film | 38.52 | 43.14 |

Table 3 clearly shows that the preferred film (Ex-1) provides improved seal strength as compared to the comparative film (Ex-a) at varying thickness of the films.

### Determination of the gloss indices of a preferred film

A preferred film (Ex-2) according to the present invention was prepared using the composition provided on Table 4. The film included a first layer, second layer and third layer comprising 25wt%, 50wt% and 25wt% of the film respectively. The composition of the first layer (25 wt% of the film), second layer (50 wt% of the film), and third layer (25 wt% of the film), were extruded through three separate extruders of a blown film device and then blown and cooled to form a film. The preferred film had a ratio of melt flow index (at 190°C and 2.16kg) of the metallocene polyolefin of the first layer to the melt flow index of the multimodal polyolefin of the second layer of 4:1.

### Measurement of gloss of the preferred film

The gloss value of a film surface is measured by a gloss meter (Novogloss). A sample of the preferred film was taken and conditioned for 24 hours at a temperature of 23°C and 50% relative humidity. The gloss reading of two opposing surface of the preferred film was measured. The gloss reading of the preferred film on a flat region of one of the opposing surfaces having the first layer was measured by the gloss meter. A minimum of 10 readings were measured from different flat regions along the machine direction and the average of these reading were recorded. Similarly the gloss reading of the other surface having the third layer was measured. The average of the reading is provided in Table 5.

**Table 4**

| Ex-2 | Bimodal polyolefin (FB2230) | Metallocene polyolefin | LDPE | LLDPE | Colourant (TiO₂) |
|---|---|---|---|---|---|
| First layer (wt%) | 0 | 80 | 20 | 0 | 0 |
| Second layer (wt%) | 67 | 33 | 0 | 0 | 0 |
| Third layer (wt%) | 60 | 22 | 0 | 3.3 | 7.7 |

**Table 5**

| Gloss measured at 60° angle | Gloss of film measured from the surface having the third layer (60°) | Gloss of film measured from the surface having the first layer (60°) |
|---|---|---|
| Minimum gloss | 6.4% | 45% |
| Maximum gloss | 6.6% | 48.1% |
| Average gloss | 6.46% | 46.76% |

From the results on Table 5, it is clearly seen that there is significant difference between gloss value of two opposing surface of the preferred film (Ex-2). The gloss value measured for the surface having the third layer was significantly lower than the gloss value measured for the surface having the first layer. The surface having the bimodal polyolefin (third layer) has a matt appearance whereas the surface having the metallocene polyolefin (first layer) has a glossy appearance.

It will be appreciated that the illustrated examples provide for a film with decreased seal thinning while still maintaining high dart impact resistance and improved processability.

It should be understood that the specific forms of the invention herein illustrated and described are intended to be representative only as certain changes may be made therein without departing from the clear teachings of the disclosure.

## Claims

1. A multilayered film comprising in sequence:
(i) a first layer comprising 80 to 100 wt% metallocene polyolefin;
(ii) a second layer comprising 60 to 100 wt% multimodal polyolefin ;
(iii) a third layer comprising 60 to 100 wt% multimodal polyolefin; and,
**characterised in that** ratio of melt flow index (at 190°C and 2.16 kg) of the metallocene polyolefin of the first layer to the melt flow index of the multimodal polyolefin of the second or the third layer is atleast 2:1.

2. A multilayered film as claimed in claim 1 wherein the melt flow index of the multimodal polyolefin of the second or third layer is from 0.1 to 0.3 g/10 minutes.

3. A multilayered film as claimed in claim 1 or 2 wherein the melt flow index of the metallocene polyolefin of the first layer is from 0.5 to 2 g/10 minutes.

4. A multilayered film as claimed in any one of the preceding claims wherein the ratio of the thickness of first layer to the combined thickness of the second and third layers is atleast 1:2.

5. A multilayered film as claimed in claim any one of the preceding claims wherein thickness of said film is 20 to 200 microns.

6. A multilayered film as claimed in any one of the preceding claims wherein the multimodal polyolefin of the second or the third layer is a bimodal polyolefin selected from bimodal LLDPE or bimodal MDPE or a mixture thereof.

7. A multilayered film as claimed in any one of the preceding claims wherein the metallocene polyolefin of the first layer, the second layer or the third layer is a metallocene LLDPE or metallocene MDPE or a mixture thereof.

8. A multilayered film as claimed in any one of the preceding claims wherein the first layer comprises not more than 8 wt % LDPE.

9. A process for making a multilayered film as claimed in claim 1 comprising the steps of:
(i) feeding a first polymer comprising 80 to 100 wt% metallocene polyolefin to a first extruder;
(ii) feeding a second polymer comprising 60 to 100 wt% multimodal polyolefin to a second extruder;
(iii) feeding a third polymer comprising 60 to 100 wt% multimodal polyolefin to a third extruder;
(iv) co-extruding the first, the second and the third polymer through said first, second and third extruders respectively to form a co-extrudate wherein the co-extrudate comprises a first layer comprising 80 to 100 wt% metallocene polyolefin; a second layer comprising 60 to 100 wt% multimodal polyolefin ; a third layer comprising 60 to 100 wt% multimodal polyolefin; and, **characterised in that** ratio of melt flow index (at 190°C and 2.16 kg) of the metallocene polyolefin of the first layer to the melt flow index of the multimodal polyolefin of the second or the third layer is at least 2:1 and,
(v) blowing the extrudate to form the multilayered film.

10. Use of a multilayered film as claimed in any one of the preceding claims 1 to 8 for making a packaging having atleast 145 grams dart impact resistance.
